# EUROPEAN PATENT SPECIFICATION

(11) **EP 3 970 870 B1**
(45) Date of publication and mention of the grant of the patent: **29.10.2025**
(21) Application number: 21197485.2
(22) Date of filing: 17.09.2021
(51) Int. Cl.: B09C 1/00

(54) **METHOD OF REUSING PFAS CONTAMINATED MATERIAL, IN PARTICULAR CLAY, CLAY SLUDGE AND CLAY-LIKE MATERIAL, BY CONVERSION INTO CERAMIC MATERIAL**
VERFAHREN ZUR WIEDERVERWENDUNG VON MIT PFAS KONTAMINIERTEN MATERIAL, INSBESONDERE TON, TONSCHLAMM UND TON ÄHNLICHEM MATERIAL, DURCH UMWANDLUNG IN KERAMIKMATERIAL
PROCÉDÉ POUR LA RÉUTILISATION D'UN MATÉRIAU CONTAMINÉ AVEC DES PFAS, EN PARTICULIER DE L'ARGILE, UNE BOUE D'ARGILE OU UN MATÉRIAU SIMILAIRE À L'ARGILE PAR TRANSFORMATION EN MATÉRIAU CÉRAMIQUE

(30) Priority: 17.09.2020 NL 1043791
(43) Date of publication of application: 23.03.2022
(73) Proprietor: CB Holding B.V., 1056 SH Amsterdam (NL)
(72) Inventor: BENSDORP, Emily Milou Marianne, 1056 SH AMSTERDAM (NL)
(74) Representative: EP&C

(56) References cited:
- S�RENG�RD MATTIAS ET AL: "Laboratory-scale and pilot-scale stabilization and solidification (S/S) remediation of soil contaminated with per- and polyfluoroalkyl substances (PFASs)", JOURNAL OF HAZARDOUS MATERIALS, ELSEVIER, AMSTERDAM, NL, vol. 402, 12 July 2020 (2020-07-12), XP086351761, ISSN: 0304-3894, [retrieved on 20200712], DOI: 10.1016/J.JHAZMAT.2020.123453

## Description

The invention relates to a method for reuse of PFAS-contaminated material, in particular contaminated clay, clay sludge and clay-like products, a method for manufacturing ceramic products, as well as products manufactured according to that method.

The present invention aims to contribute to a solution for the so-called PFAS problem, in short the problem that amongst others soil may be contaminated with PFAS and related substances, for example, see: https://nl.wikipedia.org/wiki/Poly- en perfluoralkylstoffen and https://www.rivm.nl/pfas.

From Sörengard et. al., "Laboratory-scale and pilot-scale stabilization and solidification (S/S) remediation of soil contaminated with per- and polyfluoralkyl substances (PFASs)", it is known that PFAS can be treated with a binder and granulated activated carbon (GAC) to prevent release of the PFAS from the soil. This method does not remove the PFAS, but merely captures it in the soil. This prior art reference does not disclose any conversion of the soil itself.

To this end, according to the invention, there is provided a method for reuse of PFAS-contaminated material, in particular clay and clay-containing material, which method comprises converting the contaminated material into on or more ceramic products.

The applicant has found that PFAS can be removed from, among others, contaminated clay soil and clay sludge by converting the PFAS-contaminated material in question into PFAS-free ceramic material.

The invention is based, inter alia, on the insight that, by heating the contaminated clay soil, the PFAS is substantially destroyed or removed. In particular, the PFAS can evaporate from the contaminated material under the influence of elevated temperatures and/or burn, depending on the conditions present. On evaporation, the PFAS disappears from the material and on combustion, the PFAS compounds present in the material, such as mainly (C-F), are destroyed, forming a substantially PFAS-free ceramic material.

In an embodiment, the contaminated material, in particular the contaminated clay soil, is heated to above a temperature corresponding to the quartz transformation of the material. The quartz transformation is a process in which ceramics are formed in the material, generally because chemically bound water molecules in the material, especially from the clay, evaporate. The temperature of the quartz transformation can be in the range between 500°C and 600°C, after which the material can be further heated to a final temperature in the range up to 1500°C, in particular between 1000°C and 1200°C.

This PFAS-free ceramic material can be used, for example, in the form of bricks, floor and wall tiles, roof tiles, sanitary products, crockery, etc. and/or as a ceramic raw material or semifinished product, for example for use in civil engineering applications.

In an embodiment, the substantially PFAS-free ceramic material may contain less than 5%, in particular less than 1%, of the original amount of PFAS in the contaminated material. That is, the present method aims at a reduction in the amount of PFAS of greater than 95%, in particular greater than 99%.

In particular, the process for converting the contaminated material is carried out until at least 95%, in particular 99% of the original amount of PFAS in the contaminated material has been converted.

In an embodiment, the method comprises the step of heating the contaminated material.

For this purpose, the contaminated material is preferably subjected to an elevated temperature in the range of 500°C - 1500°C, for example between 1000°C and 1200°C. The applicant has found that heating the contaminated material to an elevated temperature within this range has the effect that both the PFAS can be removed from the contaminated material and that the material can be simultaneously subjected to a ceramic firing process, whereby the material can be fixed in a solid shape.

The method according to this embodiment differs in particular from known processes for removing PFAS from contaminated material, for example by means of thermal cleaning, because the elevated temperature in the method according to this embodiment is higher than conventional cleaning techniques, such as thermal cleaning. In the known processes, that temperature for example amounts 350°C, which means that, although removal or evaporation of the PFAS can be achieved, only limitedly applicable thermally cleaned soil and toxic residual products are produced.

In an embodiment, during the ceramic firing process, the contaminated material is subjected to the elevated temperature during heating for a heating period of more than 4 hours, preferably more than 12 hours and in particular more than 24 hours, preferably followed by gradual cooling.

The applicant has found that the contaminated material, especially when heated for several hours or even several days, produces the desired properties, in particular that PFAS is removed from the material and that the material is subjected to a ceramic firing process to obtain ceramic products.

This heating period forms a further difference with other processes to remove PFAS by heating, for example with the thermal cleaning process, where the duration of heating is usually shorter, for example only a few minutes.

In an embodiment, the contaminated material is brought to the elevated temperature during heating with a firing curve of less than 250°C per hour, preferably less than 150°C and in particular less than 100°C per hour.

The applicant has found that a firing curve, i.e. a heating rate, within this range results in good removal of PFAS without unnecessarily harming the firing process, because faster heating and cooling during a ceramic firing process can result in damage to the ceramic product. This creates a further difference with a process for thermal cleaning of PFAS-contaminated material, in which temperatures of more than 350°C can be reached within a few minutes, after which the cleaned material can then be cooled quickly. The heating and cooling rates are therefore higher during thermal cleaning and therefore too high for a ceramic firing process.

In particular, the contaminated material can be heated with a first firing curve to a temperature corresponding to the quartz transition of the material and the contaminated material can be heated with a second firing curve at a temperature above the temperature corresponding to the quartz transition.

The first firing curve may on average, i.e. averaged over the entire trajectory of the first firing curve, be lower than the second firing curve, because the ceramic product to be formed is more vulnerable to damage at temperatures prior to the quartz transition than after the quartz transition. For example, the first heating curve on average amounts less than 100°C per hour and the second heating curve on average amounts more than 100°C per hour.

The present invention further relates to a method of manufacturing ceramic products, comprising the steps of providing PFAS-contaminated material, for example clay, clay sludge and clay-like material, and performing the method of reuse of PFAS-contaminated material such as described above.

With this method, it can be achieved in a single operation that the PFAS is removed from the contaminated material and that the ceramic products are formed directly therefrom, because the heating of the contaminated material causes both removal of PFAS and a ceramic firing process.

This method differs from known methods for removing PFAS from contaminated materials, such as thermal cleaning, which incorporate separate cleaning steps for the contaminated material. Examples of such separate cleaning steps are the thermal treatment of loose material contaminated with PFAS, from which limitedly usable thermal soil and toxic residual products follow.

In an embodiment, for example prior to the step of heating the contaminated material, the method comprises the step of forming ceramic products from the contaminated material, in particular from clay, clay sludge and clay-like material. By means of this method, the contaminated material is first formed into the desired form, i.e. the desired shape for the ceramic products, and the removal of the PFAS and the ceramic firing process thereafter take place simultaneously.

In this way, especially in combination with the heating of the contaminated material, the removal of the PFAS can take place while the contaminated material has already substantially been formed into the final shape and required dimensions, whereby shrinkage of the ceramic products can be taken into account.

As it were, the method according to this embodiment combines the removal of PFAS from the contaminated material and the fixing in the final form, i.e. the firing of the ceramic material.

In a further embodiment of the method, the step of forming comprises filling moulds with the PFAS-contaminated material. With this embodiment, the PFAS-contaminated material is placed in moulds, which substantially correspond to the final ceramic products. The moulds can then be completely filled with the PFAS-contaminated material or alternatively with a mixture of PFAS-contaminated material in combination with, for example, other clays and/or ceramic auxiliaries.

In this embodiment, the forming of the ceramic products actually takes place with the contaminated material, eliminating the need to clean the material first and then handle it again to shape it. This makes it possible to perform only a single heating step to both clean the contaminated material in the mould, i.e. to remove the PFAS, and to fixate it in the final shape, i.e. to bake it in the substantially PFAS-free ceramic material.

The present invention also includes all ceramic products manufactured by the method according to the invention.

Thus, the present invention contributes to solving the so-called PFAS problem.

## Claims

1. Method for reuse of PFAS-contaminated material, in particular clay, clay sludge and clay-containing material,
which method comprises converting the contaminated material into one or more ceramic products,
wherein the method further comprises the step of heating the contaminated material.

2. Method according to claim 1, wherein the contaminated material is subjected to an elevated temperature in the range of 500°C - 1500°C.

3. Method according to any of the claims 1 or 2, wherein the contaminated material is subjected to the elevated temperature during heating for a heating period of more than 4 hours, preferably more than 12 hours and in particular more than 24 hours.

4. Method according to any of the claims 1 - 3, wherein the contaminated material is brought to the elevated temperature during heating with a firing curve of less than 250°C per hour, preferably less than 150°C and in particular less than 100°C per hour.

5. Method according to claim 4, wherein the contaminated material is heated with a first firing curve to a temperature corresponding to the quartz transition of the material and wherein the contaminated material is heated at a second heating rate at a temperature above the temperature corresponding to the quartz transition.

6. Method according to claim 5, wherein the first heating curve is on average lower than the second heating curve.

7. Method according to claim 6, wherein the first heating curve on average amounts less than 100°C per hour and wherein the second heating curve on average amounts more than 100°C per hour.

8. Method for manufacturing ceramic products, comprising the steps of:
providing PFAS-contaminated material, for example clay, clay sludge and clay-like material, and
performing the method for reuse of PFAS-contaminated material according to any of the preceding claims.

9. Method according to claim 8, further comprising, for example prior to the step of heating the contaminated material, the step of forming ceramic products from the contaminated material.

10. Method according to claim 9, wherein the step of forming comprises filling moulds with the contaminated material.

11. Method according to claim 10, wherein the moulds are completely filled with the contaminated material or with a mixture of contaminated material in combination with, for example, other clays and/or ceramic auxiliaries.

## Patentansprüche

1. Verfahren zum Wiederverwenden von mit PFAS kontaminiertem Material, insbesondere Ton, Tonschlamm und tonhaltigem Material,
wobei das Verfahren Umwandeln des kontaminierten Materials in mindestens ein Keramikprodukt umfasst,
wobei das Verfahren weiterhin den Schritt des Erhitzens des kontaminierten Materials umfasst.

2. Verfahren nach Anspruch 1, wobei das kontaminierte Material einer erhöhten Temperatur im Bereich von 500 °C bis 1500 °C ausgesetzt wird.

3. Verfahren nach einem der Ansprüche 1 oder 2, wobei das kontaminierte Material beim Erhitzen für eine Erhitzungsdauer von mehr als 4 Stunden, vorzugsweise mehr als 12 Stunden und insbesondere mehr als 24 Stunden der erhöhten Temperatur ausgesetzt wird.

4. Verfahren nach einem der Ansprüche 1 bis 3, wobei das kontaminierte Material beim Erhitzen mit einer Brennkurve von weniger als 250 °C pro Stunde, vorzugsweise von weniger als 150 °C und insbesondere von weniger als 100 °C pro Stunde auf die erhöhte Temperatur gebracht wird.

5. Verfahren nach Anspruch 4, wobei das kontaminierte Material mit einer ersten Brennkurve auf eine Temperatur erhitzt wird, die dem Quarzübergang des Materials entspricht, und wobei das kontaminierte Material mit einer zweiten Erhitzungsrate auf eine Temperatur oberhalb der Temperatur erhitzt wird, die dem Quarzübergang entspricht.

6. Verfahren nach Anspruch 5, wobei die erste Erhitzungskurve im Durchschnitt niedriger ist als die zweite Erhitzungskurve.

7. Verfahren nach Anspruch 6, wobei die erste Erhitzungskurve im Durchschnitt weniger als 100 °C pro Stunde beträgt und wobei die zweite Erhitzungskurve im Durchschnitt mehr als 100 °C pro Stunde beträgt.

8. Verfahren zum Herstellen von Keramikprodukten, die folgenden Schritte umfassend:
Bereitstellen von mit PFAS kontaminiertem Material, beispielsweise Ton, Tonschlamm und Ton ähnlichem Material und
Durchführen des Verfahrens zum Wiederverwenden von mit PFAS kontaminiertem Material nach einem der vorhergehenden Ansprüche.

9. Verfahren nach Anspruch 8, weiterhin umfassend, beispielsweise vor dem Schritt des Erhitzens des kontaminierten Materials, den Schritt des Ausbildens von Keramikprodukten aus dem kontaminierten Material.

10. Verfahren nach Anspruch 9, wobei der Schritt des Ausbildens das Füllen von Formen mit dem kontaminierten Material umfasst.

11. Verfahren nach Anspruch 10, wobei die Formen vollständig mit dem kontaminierten Material oder mit einer Mischung aus kontaminiertem Material in Kombination mit beispielsweise anderen Tonen und/oder Keramikhilfsstoffen gefüllt sind.

## Revendications

1. Procédé de réutilisation d'un matériau contaminé par des PFAS, en particulier d'argile, de boue argileuse et d'un matériau contenant de l'argile,
lequel procédé comprend la transformation du matériau contaminé en un ou plusieurs produits céramiques,
le procédé comprenant en outre l'étape de chauffage du matériau contaminé.

2. Procédé selon la revendication 1, dans lequel le matériau contaminé est soumis à une température élevée dans la plage de 500 °C - 1500 °C.

3. Procédé selon l'une quelconque des revendications 1 et 2, dans lequel le matériau contaminé est soumis à la température élevée pendant le chauffage pendant une période de chauffage de plus de 4 heures, de préférence plus de 12 heures et en particulier plus de 24 heures.

4. Procédé selon l'une quelconque des revendications 1 à 3, dans lequel le matériau contaminé est porté à la température élevée pendant le chauffage avec une courbe de cuisson de moins de 250 °C par heure, de préférence moins de 150 °C et en particulier moins de 100 °C par heure.

5. Procédé selon la revendication 4, dans lequel le matériau contaminé est chauffé avec une première courbe de cuisson jusqu'à une température correspondant à la transition du quartz du matériau et dans lequel le matériau contaminé est chauffé à une deuxième vitesse de chauffage à une température supérieure à la température correspondant à la transition du quartz.

6. Procédé selon la revendication 5, dans lequel la première courbe de chauffage est en moyenne inférieure à la deuxième courbe de chauffage.

7. Procédé selon la revendication 6, dans lequel la première courbe de chauffage est en moyenne inférieure à 100 °C par heure et dans lequel la deuxième courbe de chauffage est en moyenne supérieure à 100 °C par heure.

8. Procédé de fabrication de produits céramiques, comprenant les étapes suivantes :
obtention d'un matériau contaminé par des PFAS, par exemple d'argile, de boue argileuse et d'un matériau de type argile, et
réalisation du procédé de réutilisation d'un matériau contaminé par des PFAS selon l'une quelconque des revendications précédentes.

9. Procédé selon la revendication 8, comprenant en outre, par exemple avant l'étape de chauffage du matériau contaminé, l'étape de formage de produits céramiques à partir du matériau contaminé.

10. Procédé selon la revendication 9, dans lequel l'étape de formage comprend le remplissage de moules avec le matériau contaminé.

11. Procédé selon la revendication 10, dans lequel les moules sont complètement remplis avec le matériau contaminé ou avec un mélange de matériau contaminé combiné, par exemple, à d'autres argiles et/ou des adjuvants céramiques.
